# EUROPEAN PATENT APPLICATION

(11) **EP 4 539 579 A1**
(43) Date of publication of application: **16.04.2025**
(21) Application number: 23839962.0
(22) Date of filing: 12.07.2023
(51) Int. Cl.: H04W 72/232, H04W 72/04, H04W 72/53, H04L 5/14, H04L 27/26, H04W 72/23

(54) **METHOD AND DEVICE FOR CONFIGURING SLOT FORMAT FOR FULL DUPLEX COMMUNICATION IN WIRELESS COMMUNICATION SYSTEM**

(30) Priority: 14.07.2022 KR 20220087169; 23.06.2023 KR 20230081034
(71) Applicant: KT Corporation, Seongnam-si, Gyeonggi-do 13606 (KR)
(72) Inventor: PARK, Kyujin, Seongnam-si, Gyeonggi-do 13606 (KR)
(74) Representative: BCKIP Part mbB
(86) International application number: PCT/KR2023/009944
(87) International publication number: WO 2024/014871

(57) **Abstract**

Disclosed are a method and an apparatus for performing downlink transmission and reception and uplink transmission and reception in a wireless communication system. Subband configuration information for full duplex communication is transmitted from a base station to UE. The UE performs the downlink reception or the uplink transmission through a subband based on the received subband configuration information, wherein the subband configuration information includes time domain resource configuration information, the time domain resource configuration information includes reference subcarrier spacing (SCS) configuration information and at least one pattern configuration information, and each pattern configuration information of the at least one pattern configuration information includes period information.

## Description

### Technical Field

The present disclosure relates to a 3GPP 5G NR system.

### Background Art

As more communication devices require greater communication traffic, necessity for a next generation 5G system, which is enhanced compared to a legacy LTE system, is emerging. In the next generation 5G system, scenarios can be classified into Enhanced Mobile BroadBand (eMBB), Ultra-reliability and low-latency communication (URLLC), Massive Machine-Type Communications (mMTC), and the like.

Here, eMBB corresponds to a next generation mobile communication scenario having characteristics such as high spectrum efficiency, high user experienced data rate, high peak data rate, and the like. URLLC corresponds to a next generation mobile communication scenario having characteristics such as ultra-reliable, ultra-low latency, ultra-high availability, and the like (e.g., V2X, Emergency Service, Remote Control). mMTC corresponds to a next generation mobile communication scenario having characteristics such as low cost, low energy, short packet, and massive connectivity (e.g., IoT).

### Disclosure of Invention

### Technical Problem

The disclosure is to provide a method and apparatus for a base station and a terminal to perform downlink transmission and reception and/or uplink transmission and reception through a subband for full duplex communication in a wireless communication system.

### Solution to Problem

According to an embodiment, a method for UE may be provided for performing downlink reception and/or uplink transmission in a wireless communication system. The method may include receiving subband configuration information for full duplex communication, and performing downlink reception or uplink transmission through a subband based on the received subband configuration information, wherein the subband configuration information includes time domain resource configuration information, the time domain resource configuration information includes reference subcarrier spacing (SCS) configuration information and at least one pattern configuration information, and each one of the at least one pattern configuration information includes period information.

According to another embodiment, a method for a base station may be provided for performing downlink transmission and/or uplink reception in a wireless communication system. The method may include transmitting subband configuration information for full duplex communication; and performing downlink transmission or uplink reception through a subband based on the transmitted subband configuration information, wherein the subband configuration information includes time domain resource configuration information, the time domain resource configuration information includes reference subcarrier spacing (SCS) configuration information and at least one pattern configuration information, and each one of the at least one pattern configuration information includes period information.

According to further another embodiment, a communication apparatus in a wireless communication system may be provided. The apparatus may include: at least one processor; and at least one memory configured to store instructions and be operably electrically connectable to the at least one processor, wherein operations performed based on the instructions executed by the at least one processor include receiving subband configuration information for full duplex communication; and performing downlink reception or uplink transmission through a subband based on the received subband configuration information, wherein the subband configuration information includes time domain resource configuration information, the time domain resource configuration information includes reference subcarrier spacing (SCS) configuration information and at least one pattern configuration information, and each one of the at least one pattern configuration information includes period information.

According to still another embodiment, a base station may be provided in a wireless communication system. The base station may include: at least one processor; and at least one memory configured to store instructions and be operably electrically connectable to the at least one processor, wherein operations performed based on the instructions executed by the at least one processor include transmitting subband configuration information for full duplex communication; and performing downlink transmission or uplink reception through a subband based on the transmitted subband configuration information, wherein the subband configuration information includes time domain resource configuration information, the time domain resource configuration information includes reference subcarrier spacing (SCS) configuration information and at least one pattern configuration information, and each one of the at least one pattern configuration information includes period information.

The reference SCS configuration information, the number of the at least one pattern configuration information, and the period information of each pattern configuration information may be based on corresponding information included in a time division duplex (TDD) uplink-downlink configuration common (tdd-UL-DL-ConfigurationCommon) information element.

Each pattern configuration information of the at least one pattern configuration information may further include offset information, and the offset information may indicate a start or end point of the subband.

As another embodiment, the start or end point of the subband may be fixed with a specific symbol of each pattern. In this case, the specific symbol may include one of symbols immediately preceding the first symbol, the first downlink symbol, the last downlink symbol, and the first uplink symbol of the pattern.

Each pattern configuration information of the at least one pattern configuration information may further include duration information, and is based on the number of subband full duplex (SBFD) slots and/or the number of SBFD symbols. Here, the duration information may be configured excluding symbols of a synchronization signal block (SSB). To this end, information of indicating whether to exclude the symbols of the SSB in the duration information may be transmitted from the base station and be received in the terminal.

### Advantageous Effects of Invention

According to the embodiments, downlink transmission and reception and/or uplink transmission and reception are efficiently performed through a subband for full duplex communication in a wireless communication system.

### Brief Description of Drawings

FIG. 1 illustrates a wireless communication system.
FIG. 2 illustrates a structure of a radio frame used in NR.
FIGS. 3A to 3C illustrate exemplary architectures for a wireless communication service.
FIG. 4 illustrates a slot structure of a new radio (NR) frame.
FIG. 5 shows an example of a subframe type in NR.
FIG. 6 illustrates a structure of a self-contained slot.
FIGS. 7A and 7B show schematic examples of subband full duplex communication.
FIG. 8 shows an example of slot configuration for subband full duplex communication according to an embodiment.
FIG. 9 shows another example of slot configuration for subband full duplex communication according to an embodiment.
FIG. 10 is a flowchart illustrating a method of operating a terminal according to an embodiment.
FIG. 11 is a flowchart illustrating a method of operating a base station according to an embodiment.
FIG. 12 shows apparatuses according to an embodiment of the disclosure.
FIG. 13 is a block diagram showing a configuration of a terminal according to an embodiment of the disclosure.
FIG. 14 is a configuration block diagram of a processor.
FIG. 15 is a detailed block diagram of a transceiver of a first apparatus shown in FIG. 12 or a transceiving unit of an apparatus shown in FIG. 13.

### Mode for the Invention

The technical terms used herein are intended to merely describe specific embodiments and should not be construed as limiting the disclosure. Further, the technical terms used herein should be, unless defined otherwise, interpreted as having meanings generally understood by those skilled in the art but not too broadly or too narrowly. Additionally, the technical terms used herein, which are determined not to exactly represent the spirit of the disclosure, should be replaced by or understood by such technical terms as being able to be exactly understood by those skilled in the art. Finally, the general terms used herein should be interpreted in the context as defined in the dictionary, but not in an excessively narrowed manner.

The expression of the singular form in the disclosure includes the meaning of the plural form unless the meaning of the singular form is definitely different from that of the plural form in the context. In the following description, the term 'include' or 'have' may represent the existence of a feature, a number, a step, an operation, a component, a part or the combination thereof described in the disclosure and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without departing from the scope of the disclosure.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the disclosure will be described in greater detail with reference to the accompanying drawings. In describing the disclosure, for ease of understanding, the same reference numerals are used to denote the same components throughout the drawings, and repetitive description on the same components will be omitted. Detailed description on well-known arts that are determined to make the gist of the disclosure unclear will be omitted. The accompanying drawings are provided to merely make the spirit of the disclosure readily understood, but not should be intended to be limiting of the disclosure. It should be understood that the spirit of the disclosure may be expanded to include its modifications, replacements or equivalents in addition to what is shown in the drawings.

In the disclosure, "A or B" may mean "only A", "only B", or "both A and B". In other words, "A or B" in the disclosure may be interpreted as "A and/or B". For example, "A, B or C" in the disclosure may mean "only A", "only B", "only C", or "any combination of A, B and C".

In the disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the disclosure, "at least one of A and B" may mean "only A", "only B" or "both A and B". In addition, the expression "at least one of A or B" or "at least one of A and/or B" in the disclosure may be interpreted as the same as "at least one of A and B".

In addition, in the disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the disclosure may mean "for example". In detail, when it is shown as "control information (PDCCH)", "physical downlink control channel (PDCCH)" may be proposed as an example of "control information". In other words, "control information" in the disclosure is not limited to "PDCCH", and "PDDCH" may be proposed as an example of "control information". In addition, even when shown as "control information (i.e., PDCCH)", "PDCCH" may be proposed as an example of "control information".

The technical features described individually in one drawing in this specification may be implemented separately or at the same time.

In the accompanying drawings, user equipment (UE) is illustrated by way of example, but the illustrated UE may be also referred to as a terminal, mobile equipment (ME), or the like. In addition, the UE may be a portable device such as a laptop computer, a mobile phone, a PDA, a smart phone, a multimedia device, or the like, or may be a non-portable device such as a PC or a vehicle-mounted device.

Hereinafter, the UE is used as an example of a device capable of wireless communication (e.g., a wireless communication device, a wireless device, or a wireless apparatus). The operation performed by the UE may be performed by any device capable of wireless communication. A device capable of wireless communication may also be referred to as a radio communication device, a wireless device, or a wireless apparatus.

A base station, a term used below, generally refers to a fixed station that communicates with a wireless device, and may be used to cover the meanings of terms including an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), a repeater(relay), and so on.

Although embodiments of the disclosure will be described based on an LTE system, an LTE-advanced (LTE-A) system, and an NR system, such embodiments may be applied to any communication system corresponding to the aforementioned definition.

### <Wireless Communication System>

With the success of long term evolution (LTE)/LTE-A (LTE-Advanced) for the 4th generation mobile communication, the next generation, i.e., 5^{th} generation (so called 5G) mobile communication has been commercialized and the follow-up studies are also ongoing.

The 5^{th} generation mobile communications defined by the International Telecommunication Union (ITU) refers to communication providing a data transmission rate of up to 20 Gbps and a minimum actual transmission rate of at least 100 Mbps anywhere. The official name of the 5^{th} generation mobile telecommunications is 'IMT-2020.'

The ITU proposes three usage scenarios, namely, enhanced Mobile Broadband (eMBB), massive Machine Type Communication (mMTC) and Ultra Reliable and Low Latency Communications (URLLC).

The URLLC relates to a usage scenario that requires high reliability and low latency. For example, services such as autonomous driving, factory automation, augmented reality require high reliability and low latency (e.g., a delay time of less than 1 ms). The delay time of current 4G (LTE) is statistically 21 to 43 ms (best 10%) and 33 to 75 ms (median). This is insufficient to support a service requiring a delay time of 1 ms or less. Next, the eMBB usage scenario relates to a usage scenario requiring mobile ultra-wideband.

That is, the 5G mobile communication system supports higher capacity than the current 4G LTE, and may increase the density of mobile broadband users and support device to device (D2D), high stability, and machine type communication (MTC). The 5G research and development also aims at a lower latency time and reduce battery consumption compared to a 4G mobile communication system to better implement the Internet of things. A new radio access technology (new RAT or NR) may be proposed for such 5G mobile communication.

An NR frequency band is defined as two types of frequency ranges: FR1 and FR2. The numerical value in each frequency range may vary, and the frequency ranges of the two types FR1 and FR2 may for example be shown in Table 1 below. For convenience of description, FR1 among the frequency ranges used in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values in the frequency range may vary in the NR system. For example, FR1 may range from 410 MHz to 7125 MHz as listed in [Table 1]. That is, FR1 may include a frequency band of 6 GHz (or 5850, 5900, and 5925 MHz) or above. For example, the frequency band of 6 GHz (or 5850, 5900, and 5925 MHz) or above may include an unlicensed band. The unlicensed band may be used for various purposes, such as, vehicle communication (e.g., autonomous driving).

Meanwhile, the 3GPP communication standards define downlink (DL) physical channels corresponding to resource elements (REs) carrying information originated from a higher layer, and DL physical signals which are used in the physical layer and correspond to REs that do not carry information originated from a higher layer. For example, physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH) are defined as DL physical channels, and reference signals (RSs) and synchronization signals (SSs) are defined as DL physical signals. An reference signal (RS), also called a pilot signal, is a signal with a predefined special waveform known to both a gNode B (gNB) and a UE. For example, cell specific RS, UE-specific RS (UE-RS), positioning RS (PRS), and channel state information RS (CSI-RS) are defined as DL RSs. The 3GPP LTE/LTE-A standards define uplink (UL) physical channels corresponding to REs carrying information originated from a higher layer, and UL physical signals which are used in the physical layer and correspond to REs which do not carry information originated from a higher layer. For example, physical uplink shared channel (PUSCH), physical uplink control channel (PUCCH), and physical random access channel (PRACH) are defined as UL physical channels, and a demodulation reference signal (DMRS) for a UL control/data signal, and a sounding reference signal (SRS) used for UL channel measurement are defined as UL physical signals.

In the disclosure, the PDCCH/PCFICH/PHICH/PDSCH refers to a set of time-frequency resources or a set of REs, which carry downlink control information (DCI)/a control format indicator (CFI)/a DL acknowledgement/negative acknowledgement (ACK/NACK)/DL data. Further, the PUCCH/PUSCH/PRACH refers to a set of time-frequency resources or a set of REs, which carry UL control information (UCI)/UL data/a random access signal.

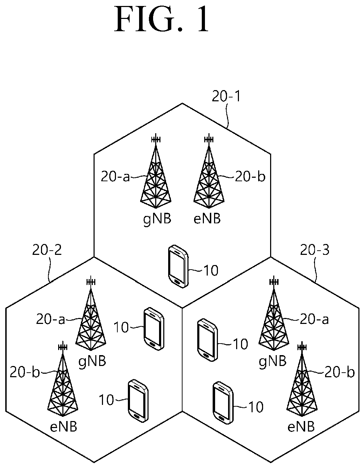

**FIG. 1** **illustrates a wireless communication system.**

Referring to FIG. 1, the wireless communication system includes at least one base station (BS). The BS includes a gNodeB (or gNB) 20a and an eNodeB (or eNB) 20b. The gNB 20a supports the 5G mobile communication. The eNB 20b supports the 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, other cells adjacent to the serving cell exist. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, the transmitter may be a part of the base station 20, and the receiver may be a part of the UE 10. In the uplink, the transmitter may be a part of the UE 10, and the receiver may be a part of the base station 20.

Meanwhile, a wireless communication system may be largely divided into a frequency division duplex (FDD) scheme and a time division duplex (TDD) scheme. According to the FDD scheme, uplink transmission and downlink transmission are performed while occupying different frequency bands. According to the TDD scheme, uplink transmission and downlink transmission are performed at different times while occupying the same frequency band. The channel response of the TDD scheme is substantially reciprocal. This means that the downlink channel response and the uplink channel response are almost the same in a given frequency domain. Accordingly, in the TDD-based radio communication system, there is an advantage that the downlink channel response can be obtained from the uplink channel response. In the TDD scheme, since uplink transmission and downlink transmission are time-divided in the entire frequency band, downlink transmission by the base station and uplink transmission by the UE cannot be performed simultaneously. In a TDD system in which uplink transmission and downlink transmission are divided in subframe units, uplink transmission and downlink transmission are performed in different subframes.

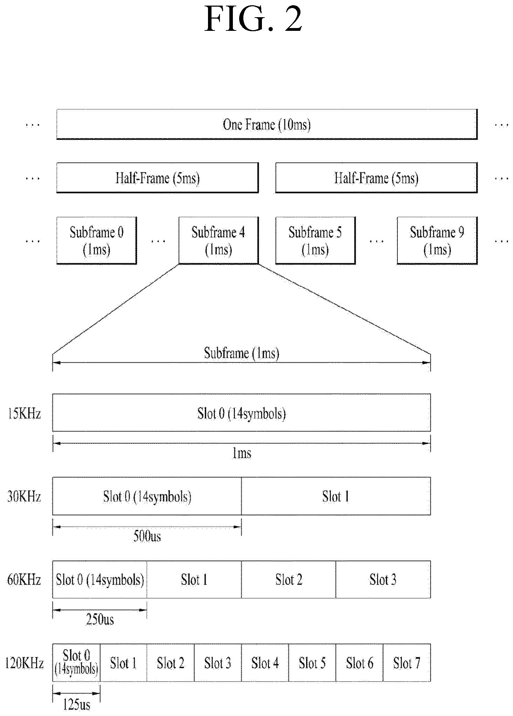

**FIG. 2** **illustrates a structure of a radio frame used in NR.**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on an SCS. Each slot includes 12 or 14 OFDM(A) symbols according to a CP. When a normal CP is used, each slot includes 14 OFDM symbols. When an extended CP is used, each slot includes 12 OFDM symbols. A symbol may include an OFDM symbol (CP-OFDM symbol) and an SC-FDMA symbol (or DFT-s-OFDM symbol).

### <Support of Various Numerologies>

With the development of wireless communication technology, multiple numerologies may be available to UEs in the NR system. For example, in the case where a subcarrier spacing (SCS) is 15 kHz, a wide area of the typical cellular bands is supported. In the case where an SCS is 30 kHz/60 kHz, a dense-urban, lower latency, wider carrier bandwidth is supported. In the case where the SCS is 60 kHz or higher, a bandwidth that is greater than 24.25 GHz is supported in order to overcome phase noise.

The numerologies may be defined by a cyclic prefix (CP) length and a subcarrier spacing (SCS). A single cell can provide a plurality of numerologies to UEs. When an index of a numerology is represented by µ, a subcarrier spacing and a corresponding CP length may be expressed as shown in the following table.

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

In the case of a normal CP, when an index of a numerology is expressed by µ, the number of OLDM symbols per slot N^{slot}_{symb}, the number of slots per frame N^{frame,µ}ₛₗₒₜ, and the number of slots per subframe N^{subframe,µ}ₛₗₒₜ are expressed as shown in the following table.

**[Table 3]**

| µ | Δf=2^{µ}·15 [kHz] | N^{slot}_{symb} | N^{fame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

In the case of an extended CP, when an index of a numerology is represented by µ, the number of OLDM symbols per slot N^{slot}_{symb}, the number of slots per frame N^{frame,µ}ₛₗₒₜ, and the number of slots per subframe N^{subframe,µ}ₛₗₒₜ are expressed as shown in the following table.

**[Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

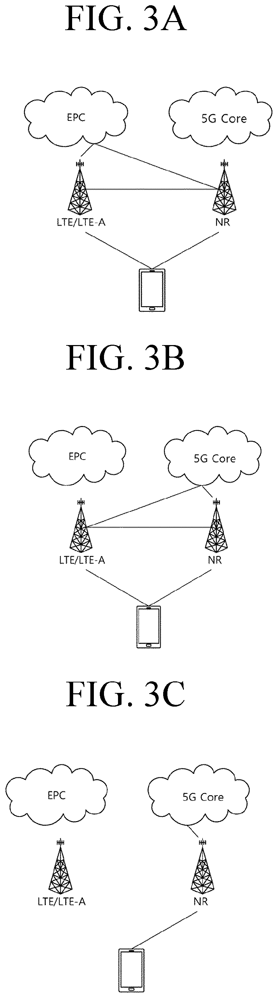

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, an Evolved Packet core (EPC).

Referring to FIG. 3B, the LTE/LTE-A cell is connected with a core network for 5th generation mobile communication, that is, a 5G core network, unlike the example in FIG. 3A.

A service based on the architecture shown in FIGS. 3A and 3B is referred to as a non-standalone (NSA) service.

Referring to FIG. 3C, a UE is connected only with an NR cell. A service based on this architecture is referred to as a standalone (SA) service.

Meanwhile, in the above new radio access technology (NR), using a downlink subframe for reception from a base station and using an uplink subframe for transmission to the base station may be considered. This method may be applied to both paired and not-paired spectrums. A pair of spectrums indicates including two subcarriers for downlink and uplink operations. For example, one subcarrier in one pair of spectrums may include a pair of a downlink band and an uplink band.

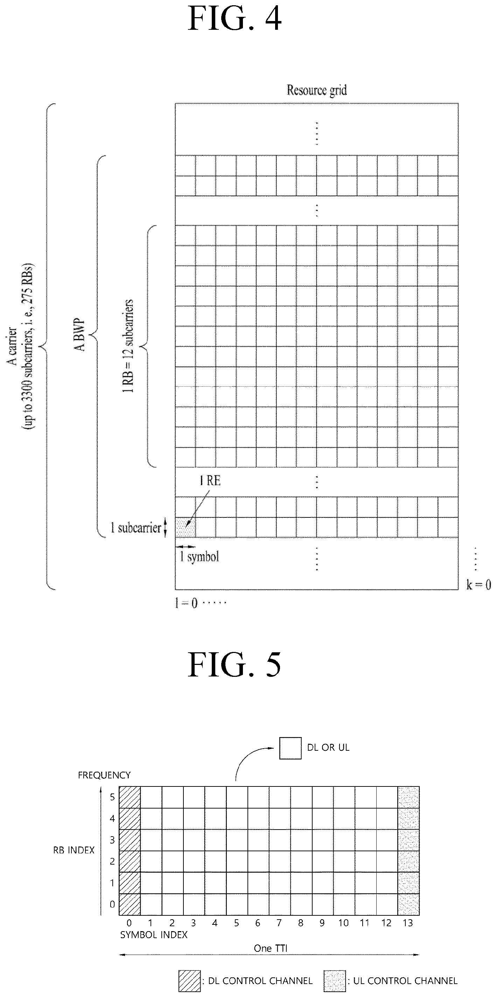

**FIG. 4** **illustrates a slot structure of an NR frame.**

A slot includes a plurality of symbols in the time domain. For example, in the case of the normal CP, one slot includes seven symbols. On the other hand, in the case of an extended CP, one slot includes six symbols. A carrier includes a plurality of subcarriers in the frequency domain. A resource block (RB) is defined as consecutive subcarriers (e.g., 12 consecutive subcarriers) in the frequency domain. A bandwidth part (BWP) is defined as a plurality of consecutive physical (P)RBs in the frequency domain and may correspond to one numerology (e.g., SCS, CP length, etc.). A UE may be configured with up to N (e.g., five) BWPs in both the downlink and the uplink. The downlink or uplink transmission is performed through an activated BWP, and only one BWP among the BWPs configured for the UE may be activated at a given time. In the resource grid, each element is referred to as a resource element (RE), and one complex symbol may be mapped thereto.

**FIG. 5** **shows an example of a subframe type in NR.**

Referring to FIG. 5, a TTI (Transmission Time Interval) may be called a subframe or a slot for NR (or new RAT). The subframe (or slot) shown in FIG. 5 can be used in a TDD system of NR (or new RAT) to minimize data transmission delay. As shown in FIG. 5, a subframe (or slot) includes 14 symbols. The symbol at the head of the subframe (or slot) can be used for a DL control channel and the symbol at the end of the subframe (or slot) can be used for a UL control channel. The remaining symbols can be used for DL data transmission or UL data transmission. According to this subframe (or slot) structure, downlink transmission and uplink transmission can be sequentially performed in one subframe (or slot). Accordingly, downlink data can be received in a subframe (or slot) and uplink ACK/NACL may be transmitted in the subframe (or slot).

Such a subframe (or slot) structure may be called a self-contained subframe (or slot).

Specifically, the first N symbols (hereinafter referred to as the DL control region) in a slot may be used to transmit a DL control channel, and the last M symbols (hereinafter referred to as the UL control region) in the slot may be used to transmit a UL control channel. N and M are integers greater than 0. A resource region between the DL control region and the UL control region (hereinafter referred to as a data region) may be used for DL data transmission or UL data transmission. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

When this subframe (or slot) structure is used, a time taken to retransmit data that has failed in reception may be reduced to minimize final data transmission latency. In such a self-contained subframe (or slot) structure, a time gap may be required in a process of transition from a transmission mode to a reception mode or from the reception mode to the transmission mode. To this end, some OFDM symbols when DL switches to UL in the subframe structure can be configured to a guard period (GP).

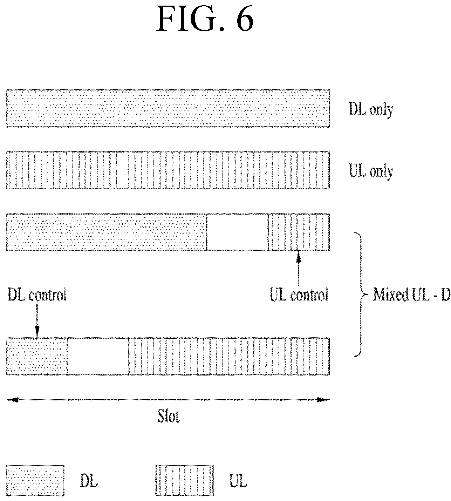

**FIG. 6** **illustrates a structure of a self-contained slot.**

In the NR system, the frame has a self-contained structure, in which all of a DL control channel, DL or UL data channel, UL control channel, and other elements are included in one slot. For example, the first N symbols (hereinafter referred to as a DL control region) in a slot may be used for transmitting a DL control channel, and the last M symbols (hereinafter referred to as an UL control region) in the slot may be used for transmitting an UL control channel. N and M are integers greater than 0. A resource region between the DL control region and the UL control region (hereinafter referred to as a data region) may be used for DL data transmission or UL data transmission. For example, the following configurations may be taken into account. The durations are listed in temporal order.
1. DL only configuration
2. UL only configuration
3. Mixed UL-DL configuration
   - DL region + Guard Period (GP) + UL control region
   - DL control region + GP + UL region
      DL region: (i) DL data region, (ii) DL control region + DL data region
      UL region: (i) UL data region, (ii) UL data region + UL control region

A PDCCH may be transmitted in the DL control region, and a PDSCH may be transmitted in the DL data region. A PUCCH may be transmitted in the UL control region, and a PUSCH may be transmitted in the UL data region. In the PDCCH, Downlink Control Information (DCI), for example, DL data scheduling information or UL data scheduling data may be transmitted. In the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A GP provides a time gap during a process where a gNB and a UE transition from the transmission mode to the reception mode or a process where the gNB and UE transition from the reception mode to the transmission mode. Part of symbols belonging to the occasion in which the mode is changed from DL to UL within a subframe may be configured as the GP.

### <Disclosures of the present specification>

Time division duplex (TDD) refers to a duplexing method widely used in commercial NR, i.e., a 5G mobile communication system. In TDD, time-segment radio resources are divided into downlink slots and uplink slots, where the downlink slots are typically distributed in a higher percentage than the uplink slots according to the distribution ratio of uplink traffic and downlink traffic. However, such a limitation of the uplink slot distribution has negative effects in terms of coverage and delay time. Recently, full duplex communication has recently attracted attention as a technology to solve such a problem.

The full duplex communication refers to technology in which the gNB, i.e., the base station performs DL transmission and UL reception simultaneously through the same (or given) radio resources. The UE may also perform DL reception and UL transmission simultaneously. In other words, both the base station and the UE may support full duplex communication. However, unlike the base station in which self-interference cancelation is structurally easy, the UE has DL reception performance susceptible to self-interference from a UL transmission signal. Therefore, it is generally considered preferable to operate the gNB in full duplex communication and operate the UE in half duplex communication. In addition, the gNB may also primarily consider a subband non-overlapping full duplex communication method in which it performs DL transmission and UL reception simultaneously, but uses different frequency resources for transmission and reception, rather than the same resources between the DL and UL to reduce the effects of self-interference.

As described above, various full duplex communication application scenarios are taken into account based on the capabilities of the base station and the UE, the frequency bands, frequency interference issues with other companies, etc.

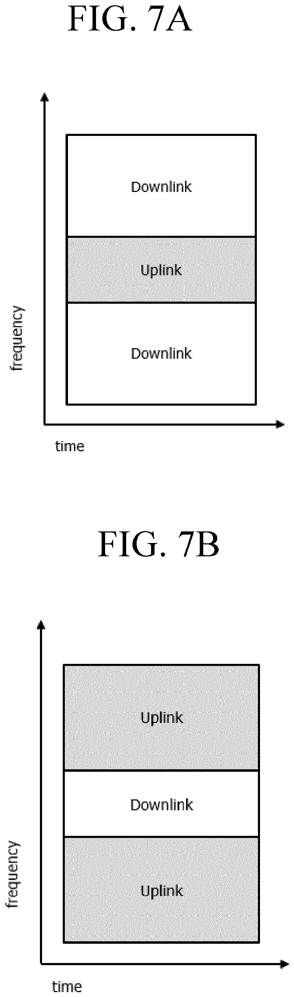

**FIGS. 7A and 7B** **show schematic examples of subband full duplex communication.**

The wireless communication system using OFDM may employ a duplexing method referred to as subband full duplex communication (SBFD). Here, the subband full duplex communication may be referred to as subband full duplex communication (SBFD) or full duplex communication subband (FDSB). Although the terms SBFD and FDSB are interchangeably used in the disclosure, they may have substantially the same meaning.

In SBFD, some time-frequency resources on a given carrier are used for the downlink, and some time-frequency resources on the same carrier are used for the uplink. Specifically, the downlink resources and the uplink resources are separated from each other in the frequency domain and used for transmission and reception.

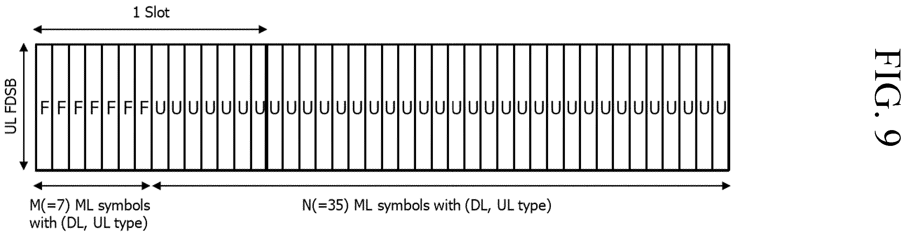

FIGS. 7A and 7B show examples of SBFD. In the frequency domain, FIG. 7A shows an example where an uplink subband is located between downlink subbands, and FIG. 9B shows an example where the downlink subband is located between the uplink subbands. Although not shown in the drawings, a guard band or guard period may be located between the downlink subband and the uplink subband to reduce interference.

The disclosure introduces a subband-based UL-DL slot configuration method for supporting subband non-overlapping full duplex communication in a gNB. However, the same method may be applied equally in various full duplex communication application scenarios. For example, the method may include full duplex communication operations in an unpaired spectrum and full duplex communication operations in a DL frequency band or UL frequency band of a paired spectrum. Further, as described above, the method may be applied to a scenario where only the gNB supports the sub-band non-overlapping full duplex communication or pure full duplex communication (i.e., simultaneous DL transmission and UL reception on the same frequency resource) and the UE performs the half duplex operations. Additionally, the method according to an embodiment may be equally applicable when both the gNB and the UE supports the sub-band non-overlapping full duplex communication or pure full duplex communication.

When the base station supports the subband non-overlapping-based full duplex communication, a UL-DL configuration is required to use frequency resources of a specific sub-band in any unpaired spectrum as DL symbols for the DL transmission, and frequency resources of another sub-band are used as UL symbols for the UL reception. However, the current UL-DL slot configuration in NR is defined to be performed in units of cells through cell-specific radio resource control (RRC) signaling. In other words, the patterns of certain periodic DL symbols, UL symbols and flexible symbols are configured through an RRC message of *'tdd-UL-DL-ConfigurationCommon'* for that UL-DL slot configuration. In addition, only the flexible symbols configured through the foregoing *'tdd-UL-DL-ConfigurationCommon'* may be reallocated to the UL symbols, DL symbols or flexible symbols for each UE through UE-specific RRC signaling of *'tdd-UL-DL-ConfigurationDedicated.'* Further, a dynamic slot format indication method using a UE-group common PDCCH is also defined in NR. To this end, NR also supports the dynamic slot format indication method through the DCI format 2_0.

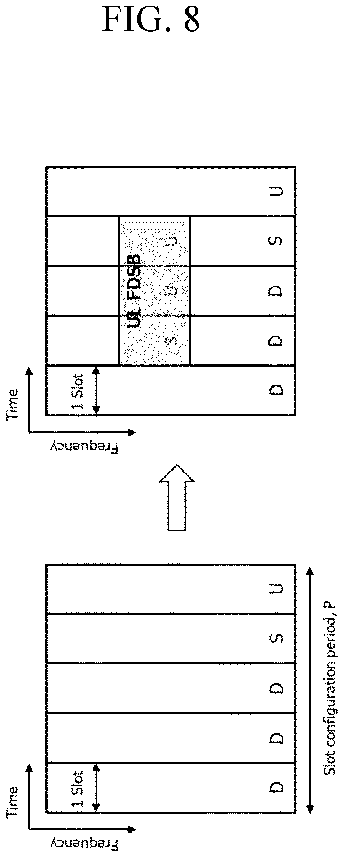

**FIG. 8** **shows an example of slot configuration for subband full duplex communication according to an embodiment.**

According to the foregoing existing slot configuration method, any symbol may be configured or indicated as one of the DL, UL or flexible symbol.

Referring to FIG. 8, the left diagram in FIG. 8 shows an exemplary slot format which is configured as DDDSU through the existing slot configuration. Here, D refers to a downlink slot indicating all the OFDM symbols in the slot are configured as DL. U refers to an uplink slot, indicating all the OFDM symbols in the slot are configured as UL. S refers to a special slot, indicating a slot that includes the flexible symbol for DL/UL transition. Generally, the special slot in the case of normal CP may contains a total of 14 symbols including 12 DL symbols and 2 flexible symbols. Alternatively, the special slot may contain 10 DL symbols, 2 flexible symbols, and 2 UL symbols. In other words, one symbol within any TDD carrier is designated as either DL, UL or flexible symbol.

However, when the UL FDSB is configured within any DL slot as shown in the right diagram in FIG. 8, any symbol associated with the UL FDSB may have a mixed transmission direction of 'DL and UL' or 'DL and flexible' according to locations of frequency resources. By the method according to the embodiment, it is proposed that the symbol where DL, UL and flexible vary based on the frequency locations, be defined separately as a mixed link (ML) symbol. In other words, the base station/network may define the existing DL, UL and flexible symbols to configure or indicate them as the ML symbol. The disclosure is not limited to the term "ML" symbol. For example, other terms such as " XL" or "X" are also included in the scope of the present specification.

As above, any ML symbol may be classified into several types according to combinations of DL, UL and flexible within that symbol. For example, when the UL FDSB is configured in any slot or symbol designated DL by the base station, any MI, symbol associated with the UL FDSB may have a combination of 'DL and UL,' or a combination of 'DL and flexible.' On the other hand, when the DL FDSB is configured in any UL slot or UL symbol, any ML symbol associated with the DL FDSB may have a combination of 'UL and DL' or a combination of 'UL and flexible.' Alternatively, when the UL SBFD is within a flexible symbol, any ML symbol may have a combination of 'flexible and UL'. On the other hand, when the DL SBFD is configured, any ML symbol may have a combination of 'flexible and DL'. In this case of any ML symbol, one or more ML symbol types may be defined depending on legacy slot configurations, i.e., slot configurations determined using the existing 'tdd-UL-DL-ConfigurationCommon', 'tdd-UL-DL-ConfigurationDedicated' or DCI format 2_0, and UL or DL SBFD configurations.

In this way, when a new symbol format (i.e., the ML symbol) is defined, and the ML symbol type is also defined according to the combinations between DL, UL and flexible symbols making up the ML symbol (i.e., the combination between the original slot configuration and the FDSB configuration), the base station/network may configure or indicate the ML symbol and the ML symbol type upon the slot configuration for the terminal within the corresponding cell.

According to the embodiment, for the convenience of description, the slot configuration supported by the existing NR rel-15, 16 and 17 is referred to as the legacy slot configuration. In other words, the slot configuration based on the existing 'tdd-UL-DL-ConfigurationCommon', 'tdd-UL-DL-ConfigurationDedicated' or DCI format 2_0 is referred to as the legacy slot configuration.

Any cell/base station may additionally transmit extended slot configuration information for a terminal that supports subband non-overlapping full duplex communication, in addition to the legacy slot configuration information mentioned earlier for terminals within the cell.

Any base station/network may transmit the extended slot configuration information including the ML symbol, in addition to the legacy slot configuration information for the terminals within a cell. The extended slot configuration information may be transmitted through cell-specific radio resource control (RRC) signaling. For example, a cell-specific RRC message, i.e., 'tdd-UL-DL-ConfigurationCommon_extended,' for the extended slot configuration may be defined. Alternatively, the extended slot configuration information may be transmitted through a terminal-specific (UE-specific) RRC signaling. For example, the UE-specific RRC message (i.e., 'tdd-UL-DL-ConfigurationDedicated_extended') for the extended slot configuration may be defined. In this case, when the legacy slot configuration is based on 'tdd-UL-DL-ConfigurationCommon', 'tdd-UL-DL-ConfigurationCommon_extended' or 'tdd-UL-DL-ConfigurationDedicated_extended' may be restricted to be based on the reference subcarrier spacing (SCS) included in the corresponding 'tdd-UL-DL- ConfigurationCommon', the number of slot configuration patterns (1 or 2 slot configuration patterns), and a configuration value for a slot configuration period of each pattern. In other words, 'tdd-UL-DL-ConfigurationCommon_extended' or 'tdd-UL-DL-ConfigurationDedicated_extended' may be restricted to have the same reference SCS, the same number of patterns, and the same period for each pattern as those of the legacy slot configuration. Based on this, the extended slot configuration information using 'tdd-UL-DL-ConfigurationCommon_extended' or 'tdd-UL-DL-ConfigurationDedicated_extended' may be defined to transmit location information about the symbols including the FDSB with respect to the symbols configured as DL, UL or flexible based on any period (e.g. P of when one pattern is configured, or P+P2 of when two patterns are configured) through the legacy slot configuration. In other words, the extended slot configuration information may be defined to include location information about the symbols reconfigured as the ML symbols. In this case, the location information about the symbols reconfigured as the ML symbol through the extended slot configuration information based on 'tdd-UL-DL-ConfigurationCommon_extended' or 'tdd-UL-DL-ConfigurationDedicated_extended' may be configured and transmitted for each pattern of the legacy slot configuration, and may include offset information and duration information (i.e., the number of symbols), etc. of the symbols reconfigured as the ML symbol. In this case, with respect to the symbols reconfigured as the corresponding ML symbol, the ML symbol type information may also be additionally defined through the corresponding 'tdd-UL-DL-ConfigurationCommon_extended'. For example, in the case of the DL symbols reconfigured as the ML symbol, there are two combinations for the flexible operation and the UL operation in the FDSB. Thus, each of the symbols reconfigured as the ML symbol in the DL may include an information area for indicating what ML symbol type it is. To this end, the corresponding indication information area may be given in the form of a bitmap for each symbol reconfigured as ML, or in the form of duration information of each ML symbol type or duration information of a specific ML symbol type. Alternatively, the information about the corresponding ML symbol type may be transmitted to each terminal through separate UE-specific RRC signaling.

As another method of configuring the ML symbol configuration information, the ML symbol is restricted to be configured from a specific location according to the types of FDSB (i.e., whether it is the UL FDSB or the DL FDSB). Then, only the type configuration information of the corresponding FDSB and the duration information starting at that location are defined through the extended slot configuration. For example, the UL FDSB may be restricted to occupy consecutive symbols preceding the last DL symbol, the last flexible symbol or first UL symbol as shown on the right diagram in FIG. 8 by the legacy slot configuration. Thus, it may be defined to configure and transmit only the information about the number of consecutive ML symbols that include the UL FDSB.

**FIG. 9** **shows another example of slot configuration for subband full duplex communication according to an embodiment.**

In the above-mentioned case of configuring and transmitting only the information about the number of consecutive ML symbols that include the UL FDSB, the number of ML symbols, i.e., "42" may be configured and transmitted to the UE in the symbol domain as shown in FIG. 9. Alternatively, in the case of the corresponding ML symbol, it may be defined to configure and transmit the number of (DL, UL) ML symbols (e.g., N=35) and the number of (DL, Flexible) ML symbols (e.g., M=7) directly to the UE. However, when it is defined to support only the specific FDSB (e.g. to support only the UL FDSB), only the information about the number of ML symbols that include the UL FDSB may be configured by the previously mentioned method without the configuration information about the types of FDSB.

Meanwhile, the method of configuring the location of the DL, UL or flexible symbol reconfigured as the ML symbol has been described above in terms of the reconfiguration to the ML symbol through 'tdd-UL-DL-ConfigurationCommon_extended' or 'tdd-UL-DL-ConfigurationDedicated_extended', the description may be configured by the base station and interpreted by the UE in different senses. In other words, to support subband non-overlapping full duplex communication, the corresponding description may be defined as the information area for configuring DL and flexible symbols that include the UL FDSB, the information area for configuring UL and flexible symbols that include the DL FDSB, etc., and set by the base station and interpreted by the terminal. That is, with respect to the symbols configured as DL symbol or flexible symbol by the legacy slot configuration, the location information about the symbol that includes the UL FDSB may be defined to be transmitted to the UE by the previously mentioned method. Alternatively, a separate cell-specific RRC or UE-specific RRC message dedicated to FDSB configuration may be defined, so that the reconfiguration information for the corresponding ML symbol can be transmitted therethrough. For example, the cell-specific or UE-specific RRC message for the UL FDSB or DL FDSB configuration may define symbol assignment information to be transmitted along with the frequency resource assignment information of the UL FDSB or DL FDSB. The symbol assignment information may be derived from the method of configuring the previously mentioned ML symbol configuration information.

In addition, a downlink control information (DCI) format 2_0 or a new UE-group common or UE-specific DCI format may be defined to indicate the slot format, including the corresponding ML symbol. According to the existing DCI format 2_0-based slot indication method, the base station may configure a slot format combination for each 'slotFormatCombinationId' to be indicated through a slot format indicator-index (SFI-index) field via RRC signaling. The slot format table for the slot format combinations is defined as shown in the following Table 5.

**[Table 5]**

| **Format** | **Symbol number in a slot** | | | | | | | | | | | | | |
|---|---|---|---|---|---|---|---|---|---|---|---|---|---|---|
| | **0** | **1** | **2** | **3** | **4** | **5** | **6** | **7** | **8** | **9** | **10** | **11** | **12** | **13** |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | U | U | U | U | U |
| 49 | D | D | D | D | F | F | U | D | D | D | D | F | F | U |
| 50 | D | D | F | F | U | U | U | D | D | F | F | U | U | U |
| 51 | D | F | F | U | U | U | U | D | F | F | U | U | U | U |
| 52 | D | F | F | F | F | F | U | D | F | F | F | F | F | U |
| 53 | D | D | F | F | F | F | U | D | D | F | F | F | F | U |
| 54 | F | F | F | F | F | F | F | D | D | D | D | D | D | D |
| 55 | D | D | F | F | F | U | U | U | D | D | D | D | D | D |
| 56 - 254 | Reserved | | | | | | | | | | | | | |
| 255 | UE determines the slot format for the slot based on *tdd-UL-DL-ConfigurationCommon,* or *tdd-UL-DL-ConfigurationDedicated* and, if any, on detected DCI formats | | | | | | | | | | | | | |

In Table 5, a new extended slot format table may be defined to configure a slot format including ML symbols through reserved formats 56 to 254 or to define additionally ML symbol types based on detailed combinations of the ML symbols. Based on this, when a slot format combination is configured for any UE, an information area may be defined to inform whether to use the legacy slot format table shown in Table 5 or whether to configure the slot format combination based on a newly defined extended slot format table, or a new extended slot format combination configuration RRC message format may be defined based on the extended slot format table.

Below, a method of configuring the UL subband (i.e., UL FDSB) and the DL subband (i.e., DL FDSB) to support the SBFD operations in the base station and the UE according to the previously mentioned method, in particular, a time domain resource assignment method of any UL subband or DL subband will be described in detail.

According to embodiments of the disclosure, when 'a specific downlink wireless channel, signal or information is received in the UE' it implies that 'the same downlink wireless channel, signal or information is transmitted from the base station'. On the other hand, when 'a specific uplink wireless channel, signal or information is transmitted from the UE' it implies that 'the same uplink wireless channel, signal or information is received in the base station'.

As described above, the UE may receive UL subband configuration information for performing the SBFD operations from the base station. In this case, the UL subband configuration information includes time resource configuration information of the corresponding UL subband. In other words, the UL subband configuration information may include SBFD symbol (i.e., ML symbol) configuration information.

The time resource configuration information of the UL subband may include reference SCS information for the corresponding time resource configuration, and pattern configuration information of the corresponding UL subband. In this case, the time resource configuration information may include up to N pattern configuration information of the UL subband. For example, N may be 2. Further, each piece of the pattern configuration information may include at least one of the following: configuration information about the period of the corresponding pattern, configuration information about the number of SBFD slots containing exclusively the SBFD symbols (i.e., only the symbols that include the UL subband), configuration information about the number of SBFD symbols, and slot or symbol offset information.

Accordingly, the UL subband may be repeatedly configured in the time domain based on the number of given patterns and the period information for each pattern, and the start point (or end point) and duration of the UL subband in the time domain may be configured within each pattern period according to the offset, SBFD slot number configuration information and/or SBFD symbol number configuration information.

The time resource configuration information of the UL subband may be semi-statically configured by the base station through the UE-specific or cell-specific RRC signaling or dynamically indicated through medium access control (MAC) control element (CE) signaling or Layer 1 (L1) control signaling.

In this case, as described above, some of the time resource configuration information of the UL subband, i.e., SBFD slot/symbol time resource configuration information where the UL subband is configured, may depend on the legacy slot configuration information. For example, the reference SCS, pattern and period configuration information for the time resource configuration of the UL subband may be derived from the reference SCS, pattern and period configuration information included in 'tdd-UL-DL-ConfigurationCommon' for the legacy slot configuration. In other words, the reference SCS, pattern and period configuration information may derive from the pattern and period configuration information included in 'tdd-UL-DL-ConfigurationCommon' for the cell-specific UL-DL configuration, i.e., the reference SCS and the configuration values for the number of slot configuration patterns (1 or 2 slot configuration patterns) and the slot configuration period (P, or P+P2 in the case of two patterns) of each pattern.

In other words, the reference SCS for the time resource configuration of any UL subband may derive from a reference SCS value included in 'tdd-UL-DL-ConfigurationCommon' for the legacy slot configuration. Further, the time resource configuration of the UL subband may be configured based on a single pattern1 having a certain period or based on both pattern1 and pattern2. In this case, whether the UL subband includes a single pattern1 or both the pattern1 and the pattern2 may depend on the number of patterns included in the legacy slot configuration 'tdd-UL-DL-ConfigurationCommon'. Further, the period information for each pattern of the UL subband, i.e., P when one pattern1 is configured, and P and P2 when both the pattern1 and the pattern2 are configured, may derive from the period values P and P2 included in the legacy slot configuration 'tdd-UL-DL-ConfigurationCommon'.

Accordingly, the time resource configuration information of any UL subband may be defined to be explicitly configured only for the offset information and duration information of the corresponding UL subband and transmitted to the UE through the UE-specific/cell-specific RRC signaling, MAC CE signaling, or L1 control signaling. Alternatively, the offset information may also be determined implicitly, and only the duration information may be explicitly configured and transmitted to the UE. In this case, the duration configuration information may include either information about only the number of consecutive SBFD symbols or the number of consecutive SBFD slots and SBFD symbols converted or reconfigured into the SBFD slots or SBFD symbols that include the UL subband, among the DL slot and DL symbols based on the legacy slot configuration, in particular, 'tdd-UL-DL-ConfigurationCommon' or the flexible symbols added thereto. In this case, the offset information corresponding to the start point (or end point) of the UL subband duration based on the corresponding consecutive (SBFD slot number + consecutive SBFD symbol number) or consecutive SBFD symbol number configuration may be explicitly defined as an offset symbol (or slot) value from each start point of the pattern1 and the pattern2 and transmitted to the UE as described above. In this case, the offset symbol may represent either the start or the end of the corresponding UL subband.

On the other hand, the offset value may have an arbitrary, fixed value. For example, the UL subband may be configured with a certain duration at the start point of each pattern (for example, the first symbol of the first DL slot based on the legacy slot configuration, 'tdd-UL-DL-ConfigurationCommon'). In this case, as described above, the duration information of the corresponding UL subband may include information about the number of consecutive DL slots and information about the number of consecutive DL symbols that include the UL subband. This could include information about the number of SBFD slots and the number of SBFD symbols converted/reconfigured into the SBFD slots/symbols through the UL subband configuration, or it may be simply include information about the number of consecutive DL symbols (i.e., information about the number of SBFD symbols) and transmitted to the UE. As another method for the invariable offset value, the corresponding invariable offset value may represent the endpoint for the UL subband duration, which is defined as a symbol immediately before the first UL symbol or the last DL symbol in each pattern based on the legacy slot configuration. Accordingly, the corresponding UL subband may be configured with the corresponding offset as the end point of its duration, determined by the number of configured SBFD slots and/or SBFD symbols.

In addition, as described above, when the duration of the UL subband is configured as the consecutive slots or symbols, the DL symbols where the synchronization signal block (SSB) transmission is configured/indicated may be defined to be excluded from the corresponding consecutive slot or symbol counting. Alternatively, the corresponding exclusion may be configured through the cell-specific/UE-specific RRC signaling or indicated through the UE-specific or group-common DCI in the base station.

### <Embodiments of the present specification>

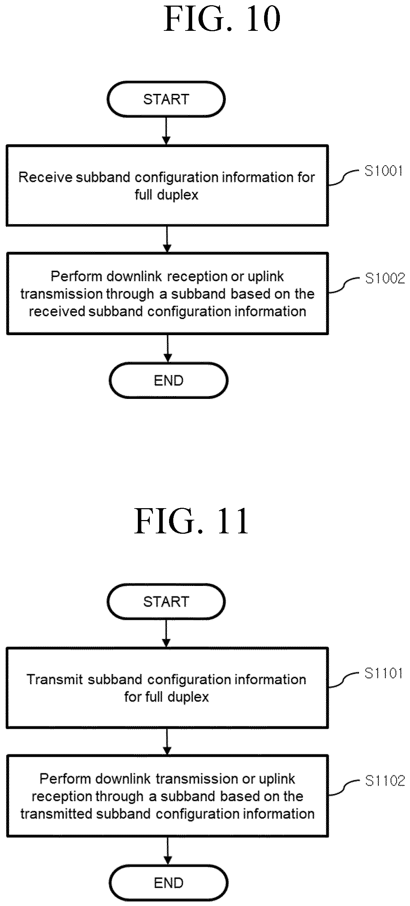

**FIG. 10** **is a flowchart illustrating a method of operating a UE according to an embodiment.**

Referring to FIG. 10, the UE receives the subband configuration information for full duplex communication from the base station (S1001). Here, the subband configuration information may be received through upper layer signaling, and semi-statically configured. The upper layer signaling may include the UE-specific RRC signaling or the cell-specific RRC signaling. On the other hand, the subband configuration information may be dynamically configured through MAC CE signaling or L1 control signaling.

Then, the downlink reception or the uplink transmission is performed through the subband based on the received subband configuration information (S1002). The subband configuration information includes the time domain resource configuration information, the time domain resource configuration information includes the reference subcarrier spacing (SCS) configuration information and at least one pattern configuration information, and each pattern configuration information may include period information.

The reference subcarrier spacing (SCS) configuration information, the number of the at least one pattern configuration information, and the period information of each pattern configuration information may be based on time division duplex (TDD) uplink-downlink configuration common (tdd-UL-DL-ConfigurationCommon) information element (IE). Preferably, they may be set to correspond to each of the reference SCS configuration information, the number of the pattern configuration information (or the number of patterns), and the period configuration information included in the ' tdd-UL-DL-ConfigurationCommon' IE.

Each pattern configuration information may further include the offset information, and the offset information may indicate the start or end point of the subband.

As another example, the start or end point of the subband may be fixed with a specific symbol of each pattern. In this case, the specific symbol may be one of symbols immediately preceding the first symbol, the first downlink symbol, the last downlink symbol, the first uplink symbol of the pattern.

Each pattern configuration information further includes the duration information, which may be based on a subband full duplex (SBFD) slot number and/or SBFD symbol number. Here, the duration information may be configured excluding the symbols of the synchronization signal block (SSB). To this end, the duration information may receive information of indicating whether to exclude the symbols of the SSB from the base station.

**FIG. 11** **is a flowchart illustrating a method of operating a base station according to an embodiment of the present specification.**

Referring to FIG. 11, the base station transmits subband configuration information for full duplex communication to the UE (S1101). The subband configuration information may be transmitted through the upper layer signaling and semi-statically configured. The upper layer signaling may be the UE-specific RRC signaling or the cell-specific RRC signaling. On the other hand, the subband configuration information may be dynamically configured through the MAC CE signaling or the L1 control signaling.

The reference subcarrier spacing (SCS) configuration information, the number of the pattern configuration information, and the period information of each pattern configuration information may be based on time division duplex (TDD) uplink-downlink configuration common (tdd-UL-DL-ConfigurationCommon) information element (IE). Preferably, they may be set corresponding to each of the reference SCS configuration information, the number of the pattern configuration information (or the number of patterns), and the period configuration information for each pattern, included in the ' tdd-UL-DL-ConfigurationCommon' IE.

Each pattern configuration information may further include the offset information, and the offset information may indicate the start or end point of the subband.

As another example, the start or end point of the subband may be fixed with a specific symbol of each pattern. In this case, the specific symbol may be one of symbols immediately preceding the first symbol, the first downlink symbol, the last downlink symbol, the first uplink symbol of the pattern.

Each pattern configuration information further includes the duration information, which may be based on a subband full duplex (SBFD) slot number and/or SBFD symbol number. The duration information may be configured excluding the symbols of the synchronization signal block (SSB). To this end, the duration information may transmit information of indicating whether to exclude the symbols of the SSB to the UE.

### <Apparatuses to which the Disclosure is applicable>

The embodiments described up to now may be implemented through various means. For example, the embodiments may be implemented by hardware, firmware, software, or a combination thereof. Details will be described with reference to the accompanying drawings.

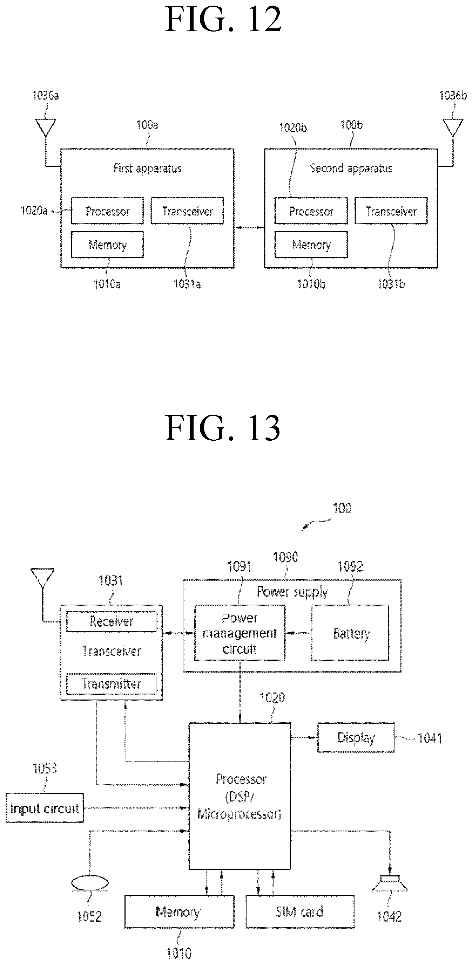

**FIG. 12** **shows apparatuses according to an embodiment of the disclosure.**

Referring to FIG. 12, a wireless communication system may include a first apparatus 100a and a second apparatus 100b.

The first apparatus 100a may include a base station, a network node, a transmission user equipment (UE), a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission UE, a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 103 1a. The processor 1020a may perform the foregoing functions, procedures, and/or methods. The processor 1020a may implement one or more protocols. For example, the processor 1020a may perform one or more layers of a radio interface protocol. The memory 1010a may be connected to the processor 1020a and configured to various types of information and/or instructions. The transceiver 1031a may be connected to the processor 1020a and controlled to transceive a radio signal.

The second apparatus 100b may include at least one processor such as a processor 1020b, at least one memory device such as a memory 1010b, and at least one transceiver such as a transceiver 1031b. The processor 1020b may perform the foregoing functions, procedures, and/or methods. The processor 1020b may implement one or more protocols. For example, the processor 1020b may implement one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

**FIG. 13** **is a block diagram showing a configuration of a UE according to an embodiment of the disclosure.**

In particular, FIG. 13 illustrates the foregoing apparatus of FIG. 12 in more detail.

The apparatus includes a memory 1010, a processor 1020, a transceiver 1031, a power management circuit 1091, a battery 1092, a display 1041, an input circuit 1053, a loudspeaker 1042, a microphone 1052, a subscriber identification module (SIM) card, and one or more antennas.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management circuit 1091 manages a power for the processor 1020 and/or the transceiver 1031. The battery 1092 supplies power to the power management module 1091. The display 1041 outputs the result processed by the processor 1020. The input circuit 1053 receives an input to be used by the processor 1020. The input unit 1053 may be displayed on the display 1041. The SIM card is an integrated circuit used to safely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. When the embodiment is implemented in software, the techniques described in the present disclosure may be implemented in a module (e.g., process, function, etc.) for performing the function described in the present disclosure. A module may be stored in the memory 1010 and executed by the processor 1020. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020 in a way to operate and transmits and/or receives a radio signal. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives a sound related input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

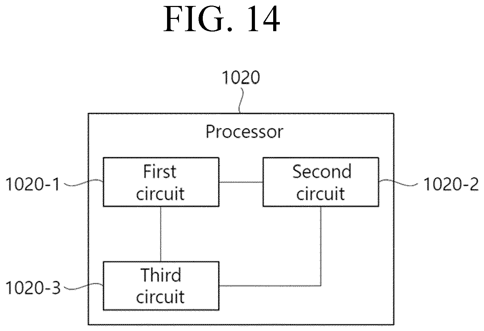

**FIG. 14** **is a configuration block diagram of a processor.**

Referring to FIG. 14, a processor 1020 may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP). The processor 1020 may include at least one of a digital signal processor (DSP), a central processing unit (CPU), and a graphics processing unit (GPU).

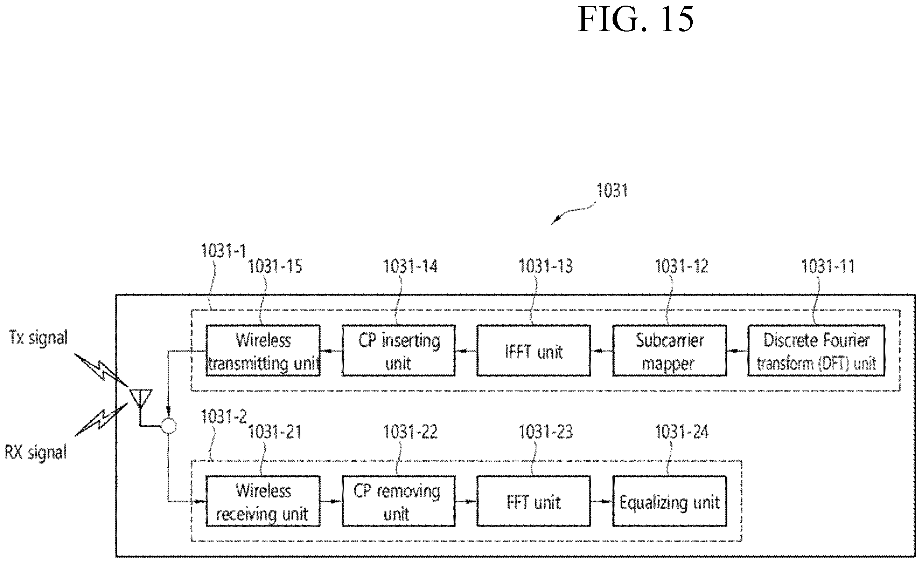

**FIG. 15** **is a detailed block diagram of a transceiver of a first apparatus shown in** **FIG. 12** **or a transceiving unit of an apparatus shown in** **FIG. 13****.**

Referring to FIG. 15, the transceiving unit 1031 includes a transmitter 1031-1 and a receiver 1031-2. The transmitter 1031-1 includes a discrete Fourier transform (DFT) unit 1031-11, a subcarrier mapper 1031-12, an IFFT unit 1031-13, a cyclic prefix (CP) insertion unit 1031-14, and a wireless transmitting unit 1031-15. The transmitter 1031-1 may further include a modulator. Further, the transmitter 1031-1 may for example include a scramble unit (not shown), a modulation mapper (not shown), a layer mapper (not shown), and a layer permutator (not shown), which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21, a CP removing unit 1031-22, an FFT unit 1031-23, and an equalizing unit 1031-24. The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method for user equipment (UE) to perform downlink reception and/or uplink transmission in a wireless communication system, the method comprising:
receiving subband configuration information for full duplex communication; and
performing the downlink reception or the uplink transmission through a subband based on the received subband configuration information,
wherein
the subband configuration information comprises time domain resource configuration information,
the time domain resource configuration information comprises reference subcarrier spacing (SCS) configuration information and at least one pattern configuration information, and
each one of the at least one pattern configuration information comprises period information.

2. The method of claim 1, wherein the reference SCS configuration information, the number of the at least one pattern configuration information, and the period information of each pattern configuration information are based on corresponding information included in a time division duplex (TDD) uplink-downlink configuration common (tdd-UL-DL-ConfigurationCommon) information element.

3. The method of claim 1, wherein each one of the at least one pattern configuration information further comprises offset information, and the offset information indicates a start or end point of the subband.

4. The method of claim 1, wherein the start or end point of the subband is fixed with a predetermined symbol of each pattern.

5. The method of claim 4, wherein the specific symbol comprises one of symbols immediately preceding the first symbol, the first downlink symbol, the last downlink symbol, and the first uplink symbol of the pattern.

6. The method of claim 1, wherein each one of the at least one pattern configuration information further comprises duration information and is based on the number of subband full duplex (SBFD) slots and/or the number of SBFD symbols.

7. The method of claim 6, wherein the duration information is configured excluding symbols of a synchronization signal block (SSB).

8. The method of claim 6, further comprising receiving information of indicating whether to exclude the symbols of the SSB in the duration information.

9. A method for a base station to perform downlink transmission and/or uplink reception in a wireless communication system, the method comprising:
transmitting subband configuration information for full duplex communication; and
performing the downlink transmission or the uplink reception through a subband based on the transmitted subband configuration information,
wherein
the subband configuration information comprises time domain resource configuration information,
the time domain resource configuration information comprises reference subcarrier spacing (SCS) configuration information and at least one pattern configuration information, and
each one of the at least one pattern configuration information comprises period information.

10. The method of claim 9, wherein the reference SCS configuration information, the number of the at least one pattern configuration information, and the period information of each pattern configuration information are based on corresponding information included in a time division duplex (TDD) uplink-downlink configuration common (tdd-UL-DL-ConfigurationCommon) information element.

11. The method of claim 9, wherein each one of the at least one pattern configuration information further comprises offset information, and the offset information indicates a start or end point of the subband.

12. The method of claim 9, wherein the start or end point of the subband is fixed with a specific symbol of each pattern.

13. The method of claim 12, wherein the specific symbol comprises one of symbols immediately preceding the first symbol, the first downlink symbol, the last downlink symbol, and the first uplink symbol of the pattern.

14. The method of claim 9, wherein each one of the at least one pattern configuration information further comprises duration information and is based on the number of subband full duplex (SBFD) slots and/or the number of SBFD symbols.

15. The method of claim 14, wherein the duration information is configured excluding symbols of a synchronization signal block (SSB).

16. The method of claim 14, further comprising transmitting information of indicating whether to exclude the symbols of the SBB in the duration information.

17. A communication apparatus in a wireless communication system, the apparatus comprising:
at least one processor; and
at least one memory configured to store instructions and be operably electrically connectable to the at least one processor,
wherein operations performed based on the instructions executed by the at least one processor comprise:
receiving subband configuration information for full duplex communication; and
performing downlink reception or uplink transmission through a subband based on the received subband configuration information,
wherein
the subband configuration information comprises time domain resource configuration information,
the time domain resource configuration information comprises reference subcarrier spacing (SCS) configuration information and at least one pattern configuration information, and
each one of the at least one pattern configuration information comprises period information.

18. The communication apparatus of claim 17, wherein the reference SCS configuration information, the number of the at least one pattern configuration information, and the period information of each pattern configuration information are based on corresponding information included in a time division duplex (TDD) uplink-downlink configuration common (tdd-UL-DL-ConfigurationCommon) information element.

19. The communication apparatus of claim 17, wherein each one of the at least one pattern configuration information further comprises offset information, and the offset information indicates a start or end point of the subband.

20. The communication apparatus of claim 17, wherein the start or end point of the subband is fixed with a specific symbol of each pattern.
